# FASCICULE DE BREVET EUROPEEN

(11) **EP 1 173 669 B1**
(45) Date de publication et mention de la délivrance du brevet: **21.07.2004**
(21) Numéro de dépôt: 00907744.7
(22) Date de dépôt: 29.02.2000
(51) Int. Cl.: F02M 21/06

(54) **DISPOSITIF DE VAPORISATION DE GAZ LIQUEFIE POUR MOTEURS MARINS**
FLÜSSIGGASVERDAMPFUNGSVORRICHTUNG FÜR SCHIFFSMOTOREN
LIQUEFIED GAS EVAPORATING DEVICE FOR MARINE ENGINES

(30) Priorité: 01.03.1999 FR 9902720
(43) Date de publication de la demande: 23.01.2002
(73) Titulaire: Di Gennaro, Antoine, 83000 Toulon (FR)
(72) Inventeur: Di Gennaro, Antoine, 83000 Toulon (FR); Porta, Michel, 83400 Hyères (FR)
(86) Numéro de dépôt international: PCT/FR2000/000496
(87) Numéro de publication internationale: WO 2000/052320

(56) Documents cités:
- FR-A- 2 757 217
- FR-A- 2 759 419
- FR-A- 2 764 002

## Description

La présente invention a pour objet un dispositif de vaporisation de gaz liquéfié pour moteurs marins.

Il a pour but de permettre l'alimentation au moyen de gaz de pétrole liquéfié de moteurs de bateaux refroidis à l'eau de mer, qu'ils soient à quatre temps ou à deux temps avec circuit de graissage sous pression, de type internes, "hors-bord" ou "Z-drive", mais est toutefois destiné en particulier aux moteurs disposés à l'intérieur du navire.

Le gaz de pétrole liquéfié (G.P.L.) est de plus en plus utilisé comme source d'énergie pour les moteurs à explosions. Ce carburant présente en effet des avantages très intéressants, en tête desquels il faut citer une très faible pollution et une taxation avantageuse pratiquée par de nombreux pays et permettant une diminution sensible des dépenses de carburant.

L'emploi de gaz liquéfié pour faire fonctionner un moteur initialement conçu pour recevoir un carburant liquide nécessite l'utilisation d'un dispositif spécifique assurant la vaporisation du gaz sous une pression et avec un débit déterminés.

Ce dispositif se présente sous la forme d'un boîtier, généralement réalisé en fonte de métal léger tel que l'aluminium comportant une chambre thermique dans laquelle circule un liquide chaud généralement constitué par l'eau de refroidissement du moteur, le boîtier étant agencé pour permettre au liquide de céder au gaz les calories nécessaires à son évaporation.

Pour les moteurs marins à refroidissement par eau de mer, il est difficile, voire impossible, d'utiliser le fluide de refroidissement pour assurer directement l'apport de calories nécessaires à la vaporisation du gaz liquéfié, l'eau de mer ayant une action corrosive sur les matériaux constitutifs du dispositif la chambre thermique risquant de détériorer rapidement celle-ci, cette action corrosive étant de surcroît accentuée par la température élevée de l'eau de mer sortant du moteur.

Les auteurs de la présente invention ont déposé plusieurs demandes de brevet relatives au chauffage des vaporisateurs de gaz liquéfié destinés en particulier aux moteurs de bateaux :
- Le vaporisateur objet du document N° FR 2 757 217 comporte, à l'intérieur de la chambre thermique, une enceinte ou un circuit tubulaire réalisé en matériau insensible à l'action corrosive de l'eau de mer chauffée, cette enceinte ou ce circuit étant raccordé à l'arrivée et au départ d'eau de refroidissement, la chambre thermique étant remplie d'un produit liquide ou pâteux bon conducteur de la chaleur apte à transmettre les calories du liquide chaud à la chambre de vaporisation.
- Le document N° FR 2 759 419 fait état d'un vaporisateur équipé d'un élément de chauffage constitué d'une résistance électrique raccordée au circuit électrique du moteur ou à une source externe.
- Le brevet international N° WO 98/55 758 décrit un boîtier de vaporisation dont la chambre thermique est raccordée en dérivation, par une double canalisation, au circuit de graissage du moteur.
- et la demande de brevet déposée sous le N° FR 98 08 110 concerne un système comportant une enceinte étanche pourvue d'un élément d'apport calorifique et reliée à la chambre thermique du boîtier de vaporisation du gaz liquéfié par une double canalisation en circuit fermé dans laquelle circule, grâce à une pompe, un fluide assurant le transfert vers le vaporisateur des calories produites dans l'enceinte chauffée.

Ces dispositifs, tout en résolvant certains problèmes posés par la vaporisation du gaz liquéfié, présentent un certain nombre d'inconvénients. Le premier cité ne permet pas une bonne transmission calorifique entre le liquide chaud et la chambre de vaporisation. L'utilisation d'une résistance électrique disposée dans la chambre thermique du vaporisateur permet difficilement de produire une quantité d'énergie suffisante avec un boîtier de vaporisation standard et nécessite, pour fonctionner correctement, d'avoir recours à un appareil surdimensionné. Le dispositif utilisant le fluide de lubrification du moteur est inutilisable pour un moteur à deux temps et présente des risques de fuites du système de lubrification. Enfin, l'utilisation d'une enceinte séparée conduit à une installation encombrante et onéreuse.

Le dispositif selon la présente invention a pour objectif de remédier à ces inconvénients. Il permet en effet de réaliser des vaporisateurs d'un coût de fabrication sensiblement égal à celui des dispositifs utilisés pour les véhicules terrestres, utilisables dans d'excellentes conditions pour les moteurs marins refroidis à l'eau de mer et assurant un très bon échange thermique entre le liquide de refroidissement et le gaz à évaporer.

Il est constitué d'un boîtier de vaporisation de gaz liquéfié comportant un élément dans lequel circule l'eau ayant servi à refroidir le moteur, cet élément étant réalisé dans un matériau résistant à l'eau de mer tel que le laiton ou le bronze et étant alimenté par l'eau de refroidissement du moteur au moyen d'une pompe placée sur le circuit d'évacuation.

Sur les dessins annexés, donnés à titre d'exemples non limitatifs de formes de réalisation de l'objet de l'invention:

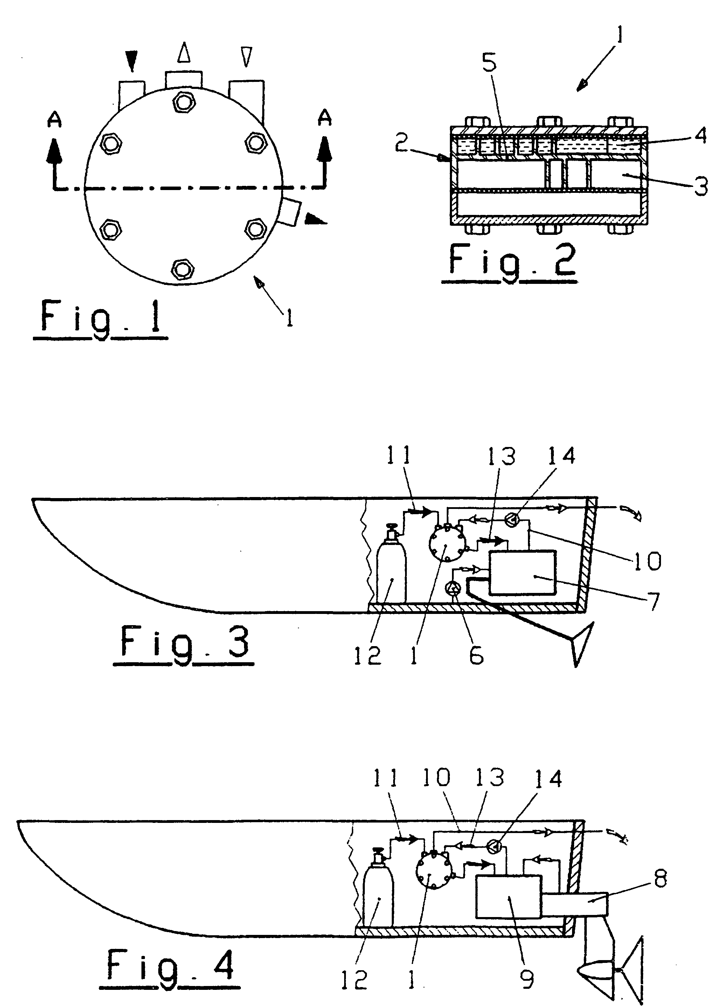

la figure 1 représente un boîtier de vaporisation vu de dessus,
la figure 2 est une coupe transversale suivant les coupes A-A de la figure précédente
et les figures 3 et 4 montrent schématiquement le mode d'installation du système, respectivement pour un moteur de type "in-board" et pour un moteur de type "Z-drive".

Les vaporisateurs de gaz de pétrole liquéfié sont constitués d'un boîtier 1 comportant un corps de chauffe 2 incorporant une chambre de vaporisation 3 et une chambre thermique 4 contiguës séparées par une paroi commune 5.

Pour les moteurs de bateaux refroidis à l'eau de mer, cette eau provient d'une pompe 6 généralement installée à bord dans le cas d'un moteur internes de type "in-board" 7, ou dans le carter de transmission 8 dans celui d'un moteur de type "Z-drive" 9. Après passage dans le moteur, l'eau est rejetée à la mer par une conduite d'évacuation 10. Dans un moteur "hors-bord" (non représenté), l'eau de mer est aspirée par une pompe intégrée et rejetée directement par le conduit d'échappement.

Le corps de chauffe 2 du vaporisateur selon l'invention contenant la chambre de vaporisation 3 et la chambre thermique 4 est réalisé dans un matériau résistant à l'action corrosive de l'eau de mer. Ce matériau sera de préférence constitué de laiton ou de bronze permettant de fabriquer un corps de chauffe identique à celui des vaporisateurs connus en fonte d'aluminium avec l'outillage utilisé pour ces derniers. Le matériau employé pourra également être une résine synthétique éventuellement chargée de fibres ou de particules métalliques pour améliorer la conductivité thermique.

La chambre de vaporisation 3 est reliée à une arrivée de gaz raccordé 11 au réservoir 12 d'alimentation et, d'autre part, à une sortie de gaz 13 raccordée au moteur 7, 9.

Le vaporisateur revendiqué est monté en dérivation sur la conduite d'évacuation 10 du circuit de refroidissement du moteur 7, 9 de façon à ce que l'eau chauffée par le moteur traverse la chambre thermique 4. Une pompe accélératrice 14 sera avantageusement montée sur la conduite d'évacuation, entre le moteur 7, 9 et la chambre thermique du vaporisateur. Dans le cas d'un moteur de type "hors-bord", le vaporisateur sera de préférence installé à bord, la chambre thermique étant raccordée au circuit de refroidissement par une conduite souple simple, le rejet s'effectuant directement à la mer, ou par une conduite souple double constituant une dérivation de la conduite d'évacuation d'eau de refroidissement du moteur.

Le positionnement des divers éléments constitutifs donne à l'objet de l'invention un maximum d'effets utiles qui n'avaient pas été, à ce jour, obtenus par des dispositifs similaires.

## Revendications

1. Dispositif de vaporisation de gaz liquéfié pour moteurs marins, permettant l'alimentation au moyen de gaz de pétrole liquéfié (G.P.L.) de moteurs de bateaux refroidis à l'eau de mer, pouvant être aussi bien à quatre temps qu'à deux temps avec circuit de graissage sous pression, de type internes, "Z-drive" ou "hors-bord", ce dispositif étant constitué d'un boîtier (1) comportant un corps de chauffe (2) incorporant une chambre de vaporisation (3) et une chambre thermique (4) contiguës séparées par une paroi commune (5),
**caractérisé en ce que** la chambre thermique (4) est traversée par l'eau de mer chaude sortant du circuit de refroidissement du moteur (7, 9) grâce à une pompe accélératrice (14) montée sur la conduite d'évacuation (10) dudit circuit de refroidissement, entre ledit moteur et ladite chambre thermique, le corps de chauffe (2) étant réalisé dans un matériau résistant à l'action corrosive de l'eau de mer.

2. Dispositif selon la revendication 1, **se caractérisant par le fait que** le corps de chauffe (2) est réalisé en bronze ou en laiton et est identique à celui des vaporisateurs connus en fonte d'aluminium et fabriqué avec l'outillage utilisé pour ces derniers.

3. Dispositif selon la revendication 1, **se caractérisant par le fait que** le corps de chauffe (2) est réalisé en résine synthétique.

4. Dispositif selon la revendication 3, **se caractérisant par le fait que** la résine synthétique utilisée pour la fabrication du corps de chauffe (2) est chargée de particules ou fibres métalliques de manière à améliorer la conductivité thermique.

5. Dispositif selon l'une quelconque des revendications précédentes utilisant un boîtier (2) de vaporisation disposé à bord du bateau pour l'alimentation d'un moteur "hors-bord", **se caractérisant par le fait que** la chambre thermique (4) est raccordée au circuit de refroidissement par une conduite souple unique, le rejet s'effectuant directement à la mer.

6. Dispositif selon l'une quelconque des revendications 1 à 4 utilisant un boîtier (2) de vaporisation disposé à bord du bateau pour l'alimentation d'un moteur "hors-bord", **se caractérisant par le fait que** la chambre thermique (4) est raccordée au circuit de refroidissement par une double conduite souple constituant une dérivation de la conduite d'évacuation d'eau de refroidissement du moteur.

## Patentansprüche

1. Verdampfungsvorrichtung von Flüssiggas für Schiffsmotoren, die die Versorgung durch Flüssiggas (GPL) von meerwassergekühlten Schiffsmotoren ermöglicht, und dies sowohl bei einem Viertakter als auch einem Zweitakter mit Druckschmierkreis des internen Typs "Z-Drive" oder "Außenborder", wobei besagte Vorrichtung über ein Gehäuse (1) verfügt, das einen Heizkörper (2) mit Verdampfungskammer (3) und Warmkammer (4) aufweist, die aneinander liegen und durch eine gemeinsame Wand (5) getrennt sind,
**dadurch gekennzeichnet, dass** die Warmkammer (4) vom warmen Meerwasser durchflossen wird, das dank einer Beschleunigungspumpe (14) aus dem Kühlkreislauf des Motors (7, 9) läuft, wobei ebendiese Pumpe auf der Abflussleitung (10) des besagten Kühlkreislaufs montiert ist, und dies zwischen besagtem Motor und besagter Warmkammer, wobei der Heizkörper (2) aus einem meerwasserkorrosionsbeständigen Material realisiert wird.

2. Vorrichtung nach Anspruch 1, **dadurch gekennzeichnet, dass** der Heizkörper (2) aus Bronze oder Messing realisiert wird und dass er dem von bekannten Verdampfern aus Aluminiumguss entspricht und dass er mit dem Werkzeug hergestellt wird, das für die letztgenannten benutzt wird.

3. Vorrichtung nach Anspruch 1, **dadurch gekennzeichnet, dass** der Heizkörper (2) aus Kunstharz realisiert wird.

4. Vorrichtung nach Anspruch 3, **dadurch gekennzeichnet, dass** das für die Herstellung des Heizkörpers (2) eingesetzte Kunstharz mit Metallpartikeln oder -fasern belastet ist, um die Wärmeleitfähigkeit zu verbessern.

5. Vorrichtung nach einem der vorhergehenden Ansprüche, die über ein Verdampfungsgehäuse (2) verfügt, das zur Versorgung eines "Außenbord"-Motors an Bord des Schiffes angebracht ist, **dadurch gekennzeichnet, dass** die Wärmekammer (4) über eine einzige Schlauchleitung an den Kühlkreislauf angeschlossen ist, wobei der Abfluss direkt in das Meer erfolgt.

6. Vorrichtung nach einem der vorhergehenden Ansprüche 1 bis 4, die über ein Verdampfungsgehäuse (2) verfügt, das zur Versorgung eines "Außenbord"-Motors an Bord des Schiffes angebracht ist, **dadurch gekennzeichnet, dass** die Wärmekammer (4) über eine doppelte Schlauchleitung an den Kühlkreislauf angeschlossen ist, die eine Umleitung der Kühlwasserabflussleitung des Motors bildet.

## Claims

1. Liquefied gas vaporisation device for marine motors, whereby boat motors cooled by sea water can be supplied with liquefied petroleum gas (LPG), said motors possibly being either four-stroke or two-stroke motors of internal type, "Z-drive" or "outboard", with pressurised lubricating system, said device comprising a box (1) comprising a heating unit (2), incorporating a vaporisation chamber (3), and a heat chamber (4) that are adjacent and separated by a common wall (5),
**characterised in that** the heat chamber (4) is passed through by the hot sea water coming out of the cooling system of the motor (7,9) thanks to a jet pump (14) mounted onto the discharge pipe (10) of said cooling system, between said motor and said heat chamber, the heating unit (2) being made from a material that is resistant to the corrosive action of sea water.

2. Device according to claim 1, **characterised in that** the heating unit (2) is made of bronze or brass and is identical to that of known vaporisers in cast aluminium and is manufactured with the tools used for the same.

3. Device according to claim 1, **characterised in that** the heating unit (2) is made from synthetic resin.

4. Device according to claim 3, **characterised in that** the synthetic resin used to manufacture the heating unit (2) is loaded with metal fibres or particles so as to improve the thermal conductivity.

5. Device according to any one of the previous claims using a vaporisation box (2) arranged on board the boat for supplying an outboard motor, **characterised in that** the heat chamber (4) is connected to the cooling system by a single flexible hose, the discharge being directly into the sea.

6. Device according to any one of claims 1 to 4 using a vaporisation box (2) arranged on board the boat for supplying an outboard motor, **characterised in that** the heat chamber (4) is connected to the cooling system by a double flexible hose forming a by-pass of the cooling water discharge pipe of the motor.
